# EUROPEAN PATENT SPECIFICATION

(11) **EP 1 029 415 B1**
(45) Date of publication and mention of the grant of the patent: **13.06.2007**
(21) Application number: 98953342.7
(22) Date of filing: 08.10.1998
(51) Int. Cl.: H04N 7/00, H04N 13/00

(54) **METHOD AND SYSTEM FOR THE CREATION AND INTERACTIVE VIEWING OF TOTALLY IMMERSIVE STEREOSCOPIC IMAGES**
VERFAHREN UND SYSTEM ZUR HERSTELLUNG UND ANZEIGE VON VÖLLIG INVERSIVEN STEREOSKOPISCHEN BILDERN
PROCEDE ET SYSTEME DE PRODUCTION ET DE VISUALISATION D'IMAGES STEREOSCOPIQUES TOTALEMENT IMMERSIVES

(30) Priority: 08.10.1997 US 61342 P
(43) Date of publication of application: 23.08.2000
(73) Proprietor: INTERACTIVE PICTURES CORPORATION, Oak Ridge, TN 98052 (US)
(72) Inventor: JACKSON, Laban, P., Knoxville, TN 37917 (US); COLE, Bruce, North Oak Ridge, TN 37830 (US); MARTIN, H., Lee, Knoxville, TN 37922 (US)
(74) Representative: Williamson, Brian
(86) International application number: PCT/US1998/021304
(87) International publication number: WO 1999/018725

(56) References cited:
- WO-A-97/01241
- WO-A-98/27457
- DD-A- 242 597
- US-A- 5 497 188
- US-A- 5 677 729
- US-B1- 6 301 447
- ONOE M ET AL: "DIGITAL PROCESSING OF IMAGES TAKEN BY FISH-EYE LENS" PROCEEDINGS OF THE INTERNATIONAL JOINT CONFERENCE ON PATTERN RECOGNITION. MUNICH, OCTOBER 19- 22 1982, NEW YORK, I.E.E.E, US, vol. PART 1 PROC. 6, 19 October 1982 (1982-10-19), pages 105-108, XP000858516

## Description

### Technical Field

This invention relates to support structures for image capturing devices and the methods for their use in the capture and creation of totally immersive stereoscopic images from fisheye or wide-angle images captured from the support structures.

### Background of the Invention

One of the purposes of modem photography is to encourage a viewer to explore an image and, in the process, transform the image into something more than a two dimensional representation of space. Panoramic images provide some feeling of being enveloped into an image, but this feeling diminishes at the periphery of the image.

To create a greater feeling of being enveloped and to provide a greater resolution image to a viewer, high numbers of picture elements have been combined to create even larger panoramic images. See, for example, U.S. Patent No. 5,083,389 to Alperin. Unfortunately, the combining of a plurality of images creates the potential for distortions at the seams of the images. Additionally, the number of images required to create a composite image in this manner is burdensome.

A partially enveloping image was disclosed in U.S. Patent No. 5,185,667 to Zimmermann. Zimmermann discloses a system and method for navigating about a spherically distorted image where the user's inputs control the displayed portion of the screen.

Another difficulty of capturing large field-of-view images is the potential for misalignment of a camera as it is moved from a first image capturing position to a second image capturing position. Further, with multiple images being captured, the possible alignment error grows with each movement of a misaligned camera. The resulting images then require additional manual correlation to compensate for any misalignment of the camera.

Yet another difficulty is providing a supporting structure which allows for the quick and easy capture of an image. Another difficulty is providing a portable support for a camera where the support does not require numerous adjustments to capture panoramic or spherical images. See, for example, PCT Application WO. 98/27457 (Kuban et al.). While the Kuban et al. system solves the above problems, it is directed to the capture of images about a single axis of rotation, which effects the usefulness of these images when used for stereoscopic viewing. This effect is due to the identical image being used as the display in each eye, which does not account for the normal inter-pupillary distance between a user's eyes. This inter-pupillary distance is necessary for realistic stereoscopic viewing.

None of this previous work uses the new techniques described in this application for the capture and creation of stereoscopic immersive images. Therefore, there is a need for the method of and apparatus for capturing fisheye or wide-angle images and then creating and displaying totally immersive stereoscopic images from the fisheye and wide-angle images.

### Summary of the Invention

The problems and related problems of the prior art are overcome by the principles of the present invention. According to these principles, a lens supporting structure is disclosed which provides exact alignment of and offsets for a image capture means. The exact alignment produces captured images that are properly aligned for easily seaming together the captured images to form spherical images. In addition, the combination of the exact alignment and offsets is used to produce multiple, properly aligned captured images to form a seamed panoramic view. Embodiments of the present invention include a base support structure that rotably attaches to an offset mounting system that includes a rotable eccentric mount support and a rotable lens mount support that attaches to and supports a image capture means. Embodiments of the present invention also contemplate the offset mounting system and rotable lens mount taking on a variety of forms and combinations. For simplicity, the rotable lens mount is described herein as a ring and associated elements thereof. Additional configurations of the rotable lens mount include a supporting platform and equivalents thereof. In at least one embodiment, the rotable lens mount attaches to a rotating sleeve that rotates about a central bore. In one embodiment the supporting structure is a tripod; in another a monopod is used to diminish the footprint of the structure on the image.

In one embodiment, the axis of rotation of the lens mount coincides with a plane of an objective lens of the lens where the plane signifies a large field-of-view of the lens. In another embodiment, the plane signifies an approximate 180-degree field-of view of the lens. In yet another embodiment, the plane signifies a field-of-view greater than 180 degrees. The axis of rotation of the lens mount is preferably co-linear with the axis of rotation of the lens. By rotating the image capture means about the rotable eccentric mount support and by rotating the lens about the axis of rotation of the lens mount, multiple images are captured. In particular, through the controlled positions of the eccentric and lens mounts, the captured images are seamed together to form totally immersive stereoscopic images. The number of fixed positions of the lens mount accounts for lenses with various fields-of-view.

In one embodiment, the offset mounting system consists of a lens mount, where the lens mount bottom securely attaches to the top end of the top-half of a two-stop rotator. The bottom end of the top-half of the two-stop rotator is rotably connected to the top end of the bottom-half of the two-stop rotator and the bottom end of the bottom half of two-stop rotator securely attaches to the top side at a first end of the eccentric mount. The bottom side at a second end of the eccentric mount securely attaches to the top end of the top-half of an n-stop rotator, where n is a number greater than one. The bottom end of the top half of the n-stop rotator is rotably connected to the top end of the bottom-half of the n-stop rotator.

By way of example only, capturing and seaming together left and right hemispherical images are described in greater detail in co-pending U.S. Application Serial No. 08/863,584 filed May 27, 1997.

Additional techniques for capturing first and second images having approximately equal to or greater than 180 degree field-of-view are described in co-pending U.S. Application Serial No. 08/494,599 filed June 23,1995.

Through the use of perspective correction and manipulation disclosed in U.S. Patent No. 5,185,667 to Zimmermann and its progeny including U.S. Patent Nos. 5,384,588; 5,359,363; and 5,313,306 and U.S. Patent Application Serial Nos. 08/189,585 filed January 31, 1994, 08/339,663 filed November 11, 1994 and 08/373,446 filed January 17, 1995, the formed seamless image is explored. The exact representation of the transformation provided by this approach allows the seamless edges to be produced when the data is collected in a controlled manner.

Consequently, a method of capturing immersive images for stereoscopic display is claimed comprising the steps of: providing a support means; rotatably mounting a first end of an offset mounting means to the support means such that the offset mounting means extends radially from its axis of rotation toward a second end of the offset mounting means; rotatably mounting an image capture means to the second end of the offset mounting means; rotating said offset mounting means through a first series of positions in a constant direction; capturing an image with said image capture means at each of said series of positions such that said images cover a 360 degree field-of view; converting each of said captured images into a first digital data image for each of said series of first positions; creating a first totally immersive representation from said first digital data images; storing said first totally immersive representation in memory; rotating said image capture means about its own mounting by 180 degrees so that the image capture means is in a second position; rotating said offset mounting means through a second series of positions in a constant direction; capturing an image with said image capture means at each of the series of positions such that the images cover a 360 degree field-of-view; converting each of said captured images into a second digital data image for each of said series of second positions; creating a second totally immersive representation from said second digital data images; and storing said totally immersive representation in memory.

The method may utilise a camera mounting apparatus for use in capturing totally immersive stereoscopic images that comprises: an n-stop rotator means having a top end and a bottom end; an eccentric mount means having a top side, a bottom side, a first end, and a second end, wherein the bottom side of the first end of the eccentric mount means is rigidly attached to the top end of the n-stop rotator means; a two-stop rotator means having a top end and a bottom end, wherein the bottom end of the two-stop rotator means is rigidly attached to the top side of the second end of the eccentric mount means; and a lens mount means having a bottom side, wherein the bottom side of the lens mount means is rigidly attached to the top end of the two-stop rotator means.

The method may utilise a system for capturing immersive images for stereoscopic display comprising: an image capture means for capturing immersive images; an offset mounting means for mounting said image capture means thereon; a support means for mounting said offset mounting means thereon; an image receiving means for receiving said captured immersive images from said camera input means; a conversion means for converting said captured immersive images into digital data images; a storage means for storing said digital data images in memory; a processing means for creating two totally immersive representations from said digital data images, one for each eye; an associating means for associating said totally immersive representations as a pair; a transformation means for transforming a portion of said totally immersive representation with distortion and perspective correction; and a stereoscopic display means for displaying said two totally immersive representations independently to each eye of a user.

An example of a method of displaying totally immersive representations comprises the steps of: transforming portions of a first totally immersive representation and a second totally immersive representation with distortion and perspective correction, wherein the transforming portions step comprises the steps of: reading even lines from a first totally immersive representation digital image file, sending said even lines to a transformer for transforming said even lines into a right eye image, reading odd lines from a second totally immersive representation digital image file, and sending said odd lines to a transformer for transforming said odd lines into a left eye image; displaying said transformed portions, wherein said displaying each said transformed portion step further comprises the steps of: selecting a stereoscopic display device for receiving said portions, said stereoscopic display device being selected from, but not limited to, the group comprising: independent miniature displays head mounted for each eye, displays with polarized filters that direct independent monitor images to each eye, color filters that direct stereo images to each eye through color mapping, and sequential shuttered glasses that alternately display every image to alternating eyes allowing the left eye to receive the left eye image and then the right eye to receive the right eye image, in rapid succession; and receiving said portions from said totally immersive representations in said stereoscopic display device.

### Brief Description of the Drawings

In the drawings,
Figure 1A illustrates a front view of one embodiment of the stereoscopic image capture system.
Figure 1B illustrates a side view of one embodiment of the stereoscopic image capture system.
Figure 2A illustrates a diagram of the image orientations and the order for the steps in the image capture process.
Figure 2B illustrates the right image digitization process and right totally immersive representation creation process.
Figure 2C illustrates the left image digitization process and left totally immersive representation creation process.
Figure 3 illustrates a flowchart of the steps in the image file display process.
Figure 4 illustrates an embodiment of a display in which the inventive method may be practiced and which is exemplary of other displays in which the inventive method may also be practiced.
Figure 5A illustrates one embodiment of the offset mounting system.
Figure 5B illustrates a side-perspective view of the lens mount.
Figure 5C illustrates a cut-away top view of the connection between the lens mount and the two-stop rotator.
Figure 5D illustrates a partial cross-section of the two-stop rotator that shows the structure of the positioning elements and central bore.
Figure 5E illustrates a bottom view of the top-half and top view of the bottom-half of the two-stop rotator.
Figure 5F illustrates a bottom view of the top-half and top view of the bottom-half of the n-stop rotator.
Figure 5G illustrates a partial cut-away view of the top side of eccentric mount at the n-stop rotator end..
Figure 6 illustrates an alternative embodiment of the offset mounting system.

### Detailed Description

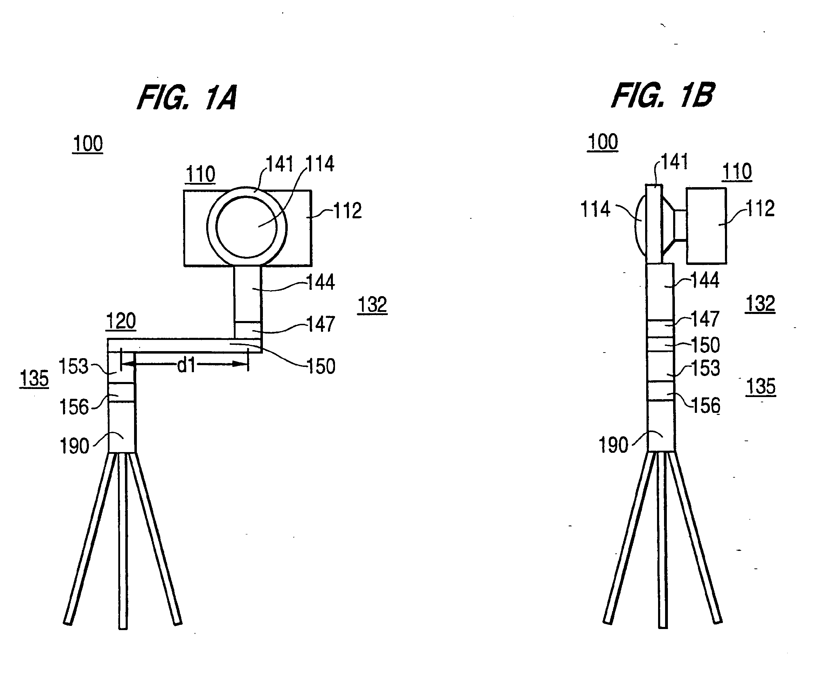

FIG. 1A shows a front view of the stereoscopic image capture system 100 as contemplated by embodiments of the present invention. System 100 includes an image capture means 110 securely mounted to an offset mounting means 120 and offset mounting means 120 is mounted to a support means 190. Image capture means 110 consists of a camera 112 with a lens 114 securely mounted to the camera 112. Embodiments of the present invention contemplate the camera 112 as a still camera taking chemical or digital pictures, or a video camera capturing video images. In one embodiment, the lens 114 is a wide-angle lens. Other embodiments of the present invention contemplate the lens 114 including the lens types of fish-eye, hemispherical, and greater than hemispherical types of lenses. Embodiments of the present invention contemplate the support means 190 including stable base structures such as tripods and tripod-monopod combinations. Offset mounting means 120 consists of a lens mount 141 that securely attaches to a top-half 144 of a two-stop rotator 132. The top-half 144 of the two-stop rotator 132 is rotably connected to a bottom-half 147 of the two-stop rotator 132. The bottom-half 147 of the two-stop rotator 132 securely attaches on the top-side of a first end of an eccentric mount 150. The bottom-side of a second end of the eccentric mount 150 securely attaches to a top-half 153 of an n-stop rotator 135, where n is a number greater than one. The top-half 153 of the n-stop rotator 13 5 is rotably connected to a bottom-half 156 of the n-stop rotator 135. The bottom-half 156 of n-stop rotator 135 is mounted on a support means 190. two-stop rotator 132 and n-stop rotator 135 are separated by an inter-device distance d1, for example, simulating the average interpupillary distance of human eyes. In one embodiment, the inter-device distance d1 is approximately 3 inches.

Embodiments of the present invention contemplate the two-stop and n-stop rotators 132 and 135, respectively, including a low friction layer between the contacting surfaces of the top-half 144 and bottom-half 146 of two-stop rotator 132 and between the top-half 153 and bottom-half 156 of n-stop rotator 135. This low friction layer preferably includes at least one Teflon TM (or equivalent) disk. Alternative embodiments of the two-stop and n-stop rotators 132 and 135, respectively, include bearings, a fluid filled enclosure, and coated surfaces. In one embodiment, the lens mount 141, two-stop rotator 132, eccentric mount 150, n-stop rotator 135, and support means 190 are made of aluminum and/or anodized aluminum.

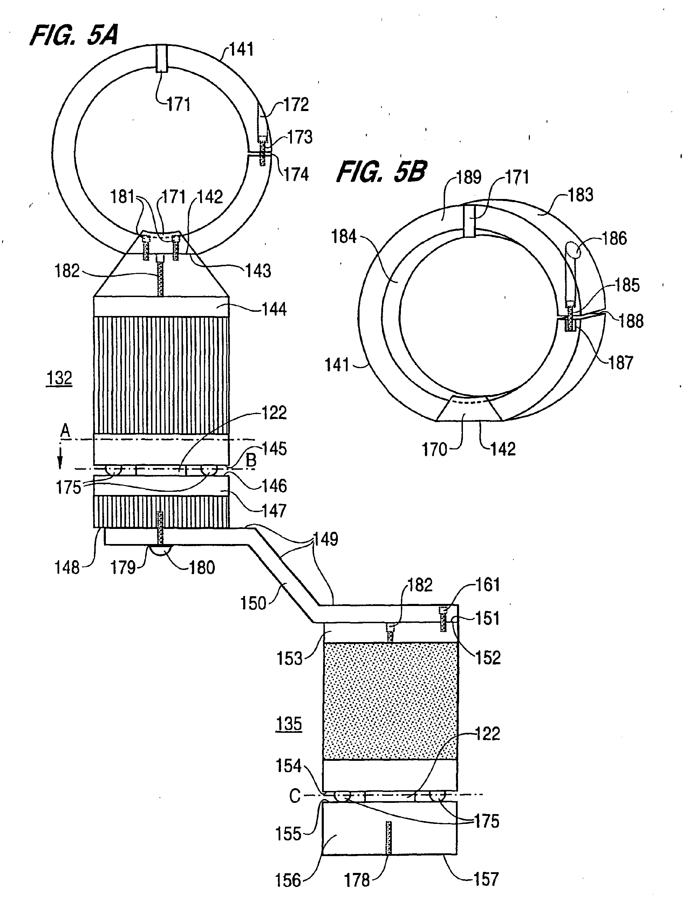

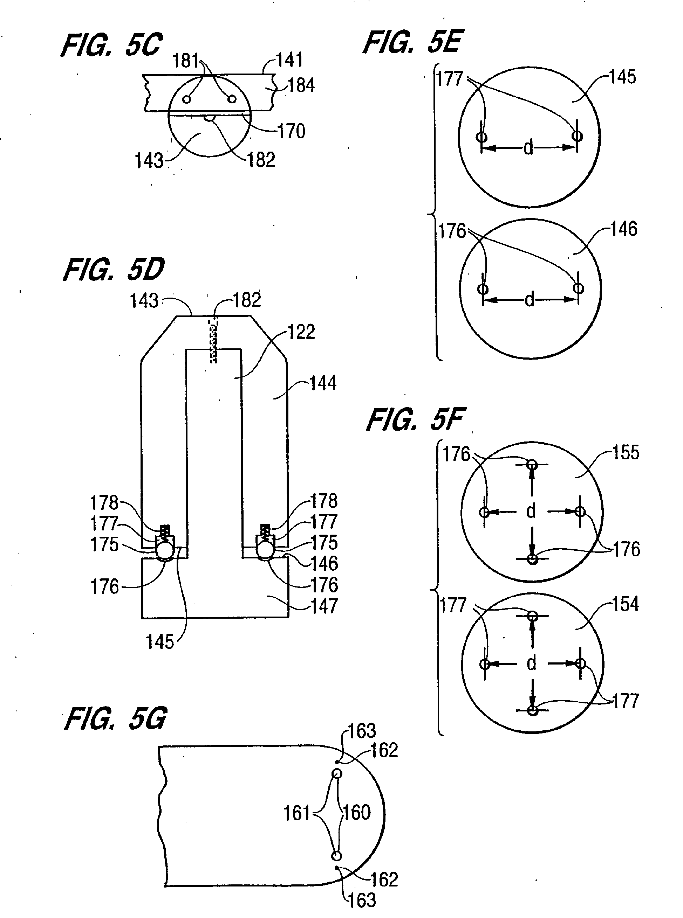

By rotating the top-half 144 of two-stop rotator 132 180 degrees, the lens 114 points in a direction opposite from its initial direction. Positioning devices (see FIG. 5 description) between top-half 144 and bottom-half 147 of two-stop rotator 132 securely maintain lens 114 in a first position and in a second, opposite position, where the first and second positions differ by 180 degrees. Accordingly, a user wishing to capture two oppositely directed images photographs a first image with the camera 112 in a first position, rotates the top-half 144 of the two-stop rotator 132 until the camera 112 is oriented in a second position, which is 180 degrees apart from the first position, and photographs a second image.

FIG. 1B illustrates a side view of the stereoscopic image capture system 100 illustrated in FIG. 1A.

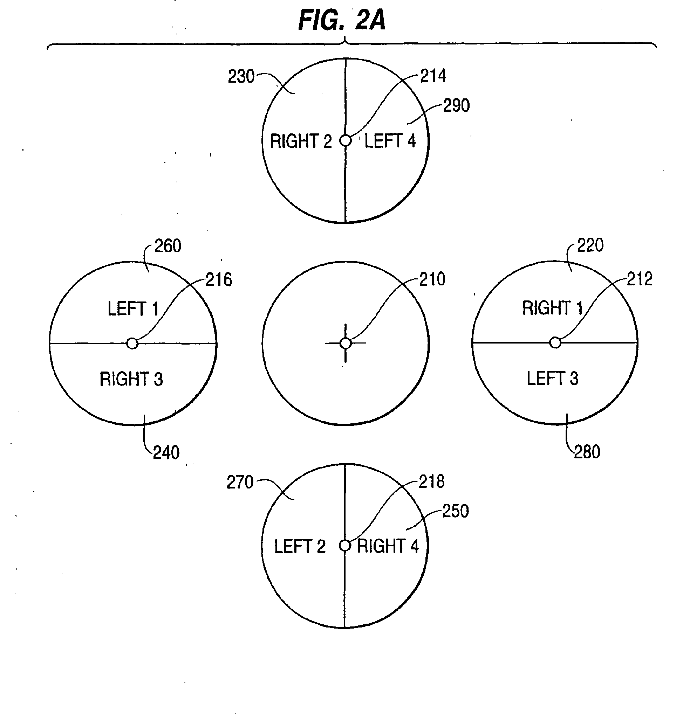

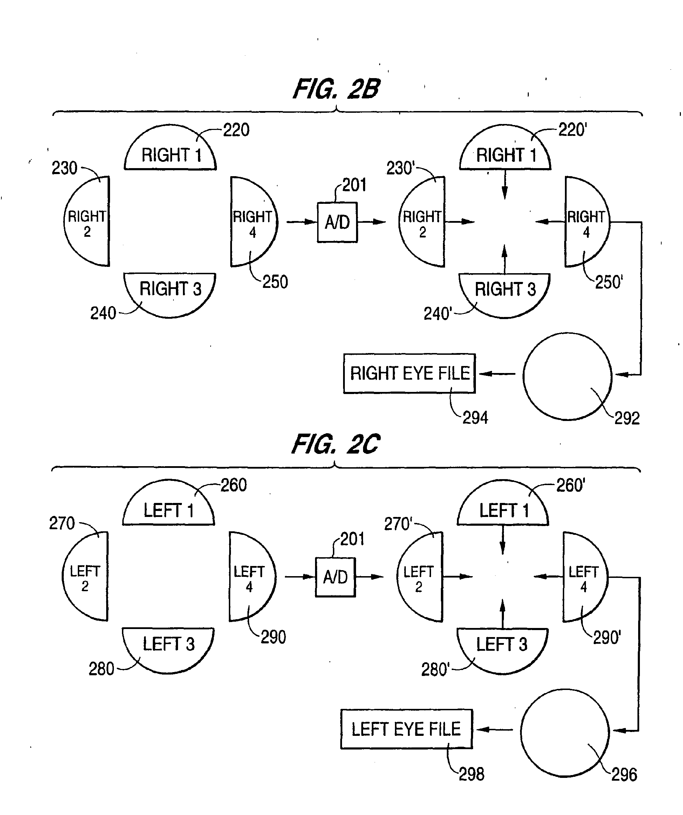

FIG. 2A shows the images captured by the stereo image capture process of the present invention. In FIG. 2, an embodiment is shown for capturing images every 90 degrees with the stereoscopic image capture system 100 being centered at point 210. In this embodiment, the center of stereoscopic image capture system 100 is the center of n-stop rotator 135 and the center of image capture means 110 is the center of two-stop rotator 132. Offset mounting means 120 is first offset to the right of center 210 so that image capture means 110 is centered over right position 212 and lens 114 is oriented toward right 1 image 220. Right 1 image 220 is captured using image capture means 110. Offset mounting means 120 is then rotated 90 degrees in a counter-clockwise direction so that image capture means 110 is centered over top position 214 with camera lens 114 oriented toward right 2 image 230. Right 2 image 230 is captured using image capture means 110. Offset mounting means 120 is again rotated 90 degrees in a counter-clockwise direction so that image capture means 110 is centered over left position 216 with lens 114 oriented toward right 3 image 240. Right 3 image 240 is captured using image capture means 110. Offset mounting means 120 is rotated a final 90 degrees in a counter-clockwise direction so that image capture means 110 is centered over bottom position 218 with lens 114 oriented toward right 4 image 250. Right 4 image 250 is captured using image capture means 110.

FIG. 2B shows right 1, 2, 3, and 4 images 220, 230, 240, and 250, respectively, are sent through an Analog-to-Digital (A/D) converter 201 and digitized into right 1, 2, 3, and 4 digital images 220', 230', 240', and 250', respectively. Then, all of the right digital images 220', 230', 240', and 250 are combined into a right eye totally immersive representation 292. The right eye totally immersive representation 292 is then stored in a right eye file 294 for future display. While the order of image capture and the direction of rotation of the offset mounting means 120 can be varied in alternate embodiments of the present invention, this will require additional manual operator intervention and a more complex processing system. The order and constant direction specified in this embodiment of the present invention has been selected to maximize the efficiency of the image capture and totally immersive representation creation processes. The constant direction specified in this embodiment could have also been clockwise.

A similar set of steps are followed to capture the left eye images. Offset mounting means 120 is first offset to the left of center 210 so that image capture means 110 is centered over left position 216 and lens 114 is oriented toward left 1 image 260. Left 1 image 260 is captured using image capture means 110. Offset mounting means 120 is then rotated 90 degrees in a counter-clockwise direction so that image capture means 110 is centered over bottom position 218 with lens 114 oriented toward left 2 image 270. Left 2 image 270 is captured using image capture means 110. Offset mounting means 120 is again rotated 90 degrees in a counter-clockwise direction so that image capture means 110 is centered over right position 212 with lens 114 oriented toward left 3 image 280. Left 3 image 280 is captured using image capture means 110. Offset mounting means 120 is rotated a final 90 degrees in a counter-clockwise direction so that image capture means 110 is centered over top position 214 with lens 114 oriented toward left 4 image 290. Left 4 image 290 is captured using image capture means 110.

FIG. 2C shows left 1, 2, 3, and 4 images 260, 270, 280, and 290, respectively, are sent through the A/D converter 201 and digitized into left 1, 2, 3, and 4 digital images 260', 270', 280', and 290', respectively. Then, all of the left digital images 260', 270', 280', and 290 are combined into a left eye totally immersive representation 296. The left eye totally immersive representation 296 is then stored in a left eye file 298 for future display.

The creation of the right and left totally immersive representations 292 and 296, respectively, and subsequent storage in right and left eye files 294 and 298 296, respectively, create images that are internally seamless and perfectly aligned. Similarly, the points in the right eye file 294 and the left eye file 298 are also perfectly aligned so as to provide the correct perspective view for each eye. This is important for accurate and realistic stereoscopic displays of the stored images to a user's left and right eyes.

Alternate embodiments can include capturing images at different offset angles, including, but not limited to: 180, 110, 72, 60, 45, 40, 36, and 30 degrees. In another embodiment, images could also be captured in the up and down directions either independent of or in combination with the left and right images.

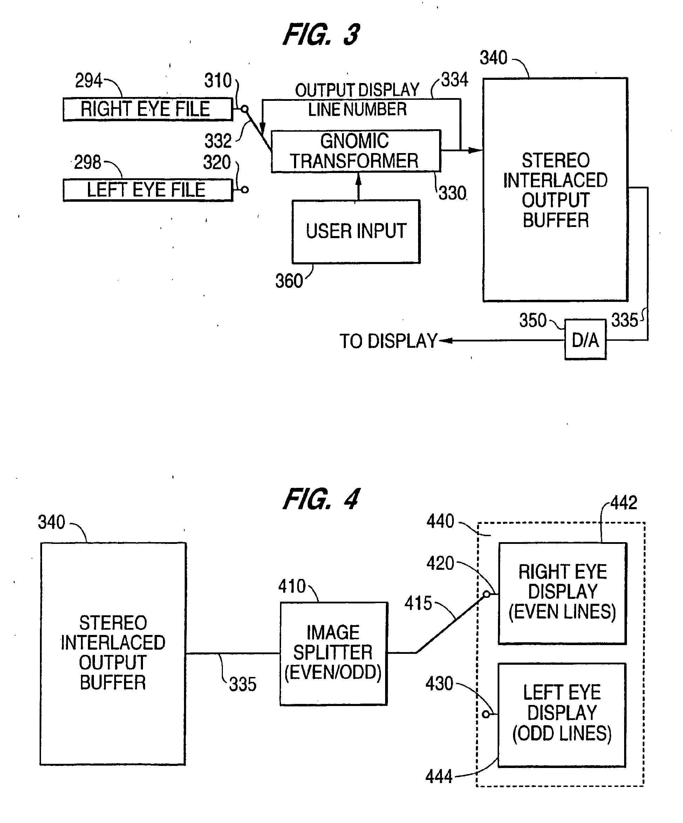

FIG. 3 shows a flowchart of the steps performed in one embodiment of the stereoscopic image file display process. In FIG. 3, the right eye file 294 and left eye file 298 information are alternately output through right eye connection 310 and left eye connection 320 to input connection 332 for gnomic transformer 330. Gnomic transformer 330 produces an interlaced stereo image by interlacing the right eye file 294 information into the even numbered lines and the left eye file 298 information into the odd numbered lines of the interlaced stereo image. Interlacing of the image data is accomplished by feedback loop 334, which outputs the number of the next line in the image, and, if it is an even number, then input connection 332 switches to right eye connection 310 to receive the next line of image data. Similarly, if the output line number is an odd number, then input connection 332 switches to left eye connection 320 to receive the next line of image data. This interlaced stereo image is then sent to a stereo interlaced output buffer 340. In one embodiment, stereo interlaced output buffer 340 outputs the stereo image as an interlaced display signal 335 to a Digital-to-Analog (D/A) converter 350 which converts interlaced display signal 335 to an analog signal and then transmits the analog signal to a display.

FIG. 4 shows one embodiment of a stereo display apparatus in which the inventive method may be practiced and which is exemplary of other displays in which the inventive method may also be practiced. In FIG. 4, the interlaced display signal 335 is output from stereo interlaced output buffer 340 to an image splitter 410. Image splitter 410 splits out the even and odd lines from the interlaced display signal 335 and sends the even lines via output connection 415 to a right eye display connection 420 to a right eye display 442 and sends the odd lines via output connection 415 to a left eye display connection 430 to the left eye display 444 of a miniature head mounted display 440. Output connection 415 switches between right eye display connection 420 and left eye display connection 430 based on the line number of the next line to be output. For example, if the next line to be output is an even number then output connection 415 switches to the right eye display connection 420, and if the next line to be output is an odd number then output connection 415 switches to the left eye display connection 430. Alternative stereo displays include, but are not limited to, the following: dual displays; independent miniature displays head mounted for each eye; displays with polarized filters that direct independent monitor images to each eye; color filters that direct stereo images to each eye through color mapping; and sequential shuttered glasses that alternately display every image to alternating eyes allowing the left eye to receive the left eye image and then the right eye to receive the right eye image, in rapid succession.

FIG. 5A shows one embodiment of offset mounting means 120. In FIG 5A, offset mounting means 120 consists of a lens mount 141 with a lens mount bottom 142 that securely attaches to the top end 143 of the top-half 144 of a two-stop rotator 132. The bottom end 145 of the top-half 144 of the two-stop rotator 132 is rotably connected to the top end 146 of the bottom-half 147 of the two-stop rotator 132 and the bottom end 148 of the bottom-half 147 of the two-stop rotator 132 securely attaches to a top side 149 at a first end of an eccentric mount 150. Bottom side 151, at a second end of the eccentric mount 150, securely attaches to a top end 152 of a top-half 153 of an n-stop rotator 135, a bottom end 154 of the top-half 153 of the n-stop rotator 135 is rotably connected to a top end 155 of a bottom-half 156 of the n-stop rotator 135. Bottom end 157 of bottom-half 156 of n-stop rotator 135 contains a support means mounting recess 178 for attaching the offset mounting means 120 to the support means 190. The surface of both top-half 144 and bottom-half 147 can have a grooved areas to provide easier grasping by a user when rotating the two-stop rotator 132. Likewise, the grooved areas could be knurled, bumped, or some other grip enhancing structure in other embodiments.

FIG. 5B provides a side-perspective view of lens mount 141. In FIG. 5B, lens mount 141 comprises an outer surface 183, an inner surface 184, an image side 189, and a back side (not shown). Lens mount 141 is a substantially complete annular ring having an opening 188 that extends the across the width of image side 189 and extending between inner and outer surfaces 184 and 183, respectively, to create upper and lower portions of lens mount 141. Fastening screw 185 is recessed downward through recessing slot 186 on outer surface 183 in the upper portion of lens mount 141, passing through opening 188, and into the lower portion of lens mount 141 having a screw recess 187 for receiving the fastening screw 185. In the present embodiment opening 188 is disposed at an approximately 90 degree angle from lens mount bottom 142. Lens mount bottom 142 is a flat section on the lower portion of outer surface 183. Fastening screw 185 is loosened to permit installation of lens 114 (not shown) and tightened to close opening 188 to securely hold lens 114. Alternate embodiments of the lens mount are disclosed in co-pending U.S. Application Serial No. 08/767,376.

Embodiments of the present invention contemplate the two-stop and n-stop rotators 132 and 135, respectively, including a low friction layer between the contacting surfaces of top-half 144 of two-stop rotator 132 and bottom-half 147 of two-stop rotator 132 and between top-half 153 of n-stop rotator 135 and bottom-half 156 of n-stop rotator 135. This low friction layer preferably includes at least one Teflon TM (or equivalent) disk. Alternative embodiments of the two-stop and n-stop rotators 132 and 135, respectively, include bearings, a fluid filled enclosure, and coated surfaces. In one embodiment, the lens mount 141, two-stop rotator 132, eccentric mount 150, n-stop rotator 135, and support means 190 are made of aluminium and/or anodized aluminium.

FIG.5C show a cut-away top view of the connection of lens mount 141 and top end 143 of top-half 144 of two-stop rotator 132. Lens mount 141has a pair of screws 181 recessed through inner surface 184, extending through lens mount bottom 142 and into top end 143 of top-half 144 of 2 stop-rotator 132 to securely fasten lens mount 141 to top end 143. Bottom lip 170 is attached to image side 189 of lens mount 141 with the bottom edge of bottom lip 170 being aligned with and extending along lens mount bottom 142. Bottom lip 170 extends from the lens mount bottom 142 along image side 189 with the top edge of bottom lip 170 extending a short distance past inner surface 184. The top edge of bottom lip 170 is curved in substantially the same arc as inner surface 184. Bottom lip 170 is centered over top end 143 and recessed screw 182. Top lip 171 is similarly attached to image side 189 of lens mount 141 with top edge of top lip 171 being substantially aligned with outer surface 183 at a point essentially 180 degrees from bottom lip 170. Top lip 171 extends downward from outer surface 183 along image side 189 with the bottom edge of top lip 171 extending a short distance past inner surface 184. Alternate embodiments for lips include, but are not limited to: a single continuous lip and more than two lips equally arranged around image side 189.

Referring again to FIG. 5A, recessed screw 182 extends from top end 143 of top-half 144 of two-stop rotator 132 downward through bottom end 145 of top-half 144 and into two-stop rotator central bore 122 where it terminates and operates to rotably connect top-half 144 and bottom-half 147 of two-stop rotator 132, FIG. 5A also shows screw 180 passing through washer 179 and bottom side 152 at a first end of eccentric mount 150 and into bottom end 148 of bottom-half 147 of two-stop rotator 132 to securely fasten two-stop rotator 132 to eccentric mount 150.

FIG 5D is a partial cross-section of two-stop rotator 132 along line A and shows the internal structure of the two-stop rotator 132 positioning elements. In the present embodiment, bottom end 145 of top-half 144 contains two recesses 177 positioned 180 degrees apart along the center line of bottom end 145. Springs 178 are positioned in recesses 177, ball bearings 175 are positioned on top of the springs 178, and bottom-half 147 is fastened to top-half 144 so that top end 146 of bottom-half 147 contact ball bearings 175 and strain springs 178 into recesses 177. The strain on springs 178 creates a force that constantly pushes ball bearings 175 against top end 146 of bottom-half 147. In the present embodiment, top-half 144 is fastened to bottom-half 147 by inserting fastening screw 182 through top end 143 of top-half 144 and into central bore 122 that extends from bottom-half 147. Referring now to FIG. 5E, as ball bearings 175 slide into curved indents 176 on top end 146 of bottom-half 147 the force exerted by the strained springs holds the ball bearings 175, and, thus, two-stop rotator 132 in place. Significant force must be exerted to move the ball bearings 175 out of the curved indents 176 in order to rotate the two-stop rotator 132. The on-center distance d between recesses 177 is equal to the on-center distance between curved indents 176. In addition, recesses 177 and curved indents 176 are aligned along the center line of two-stop rotator 132. In an alternate embodiment with an odd number of recesses and curved indents, the recesses and curved indents would have equidistant radii from the center point of the two-stop rotator 132 and be at equal offset angles, for example, radii equal to .5 inches and the offset angles equal to 110 degrees for a 3-stop rotator.

FIG. 5F shows the four recesses 177 and curved indents 176 of the current embodiment of the n-stop rotator 135. The operation is consistent with that described above for two-stop rotator 132 and alternate embodiments with odd numbers of recesses and curved indents.

FIG. 5G shows a partial cut-away view of top side 149 at a second end of eccentric mount 150. Screws 161 are recessed into and through eccentric mount 150 through recessed screw holes 160 and into top end 152 of top-half 153 of n-stop rotator 135. Recessed screw holes 160 are parallel to and offset from the center line of n-stop rotator 135. Eccentric mount 150 also has locator pin holes 162 to receive locator pins 163. Locator pins 163 extend through eccentric mount 150 and into top end 152 of top half 153 of n-stop rotator 135.

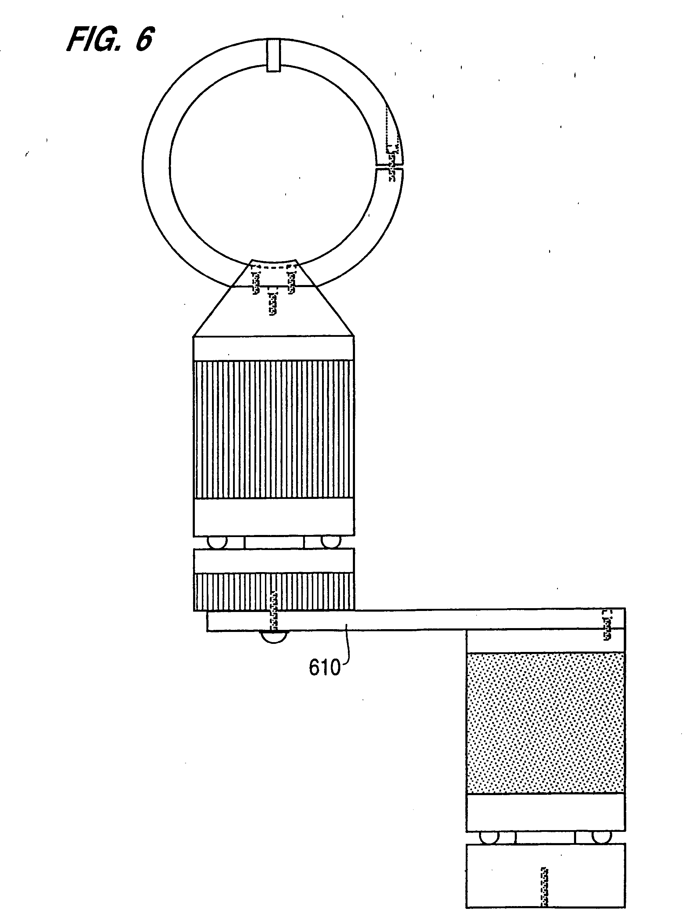

FIG. 6 shows an alternate embodiment of the offset camera platform means 500. In this embodiment, the angled eccentric mount 150 of FIG. 5 is replaced with a straight eccentric mount 610. All other elements are identical to those described above for FIG. 5A. Another alternate embodiment would replace the angled eccentric mount 150 of FIG. 5A with a centered straight mount so that equal lengths of the straight mount extend past the n-stop rotator 135. In addition, the straight mount would permit the two-stop rotator 132 to slide from side-to-side.
What has been described is merely illustrative of the application of the principles of the present invention. Other arrangements and methods can be implemented by those skilled in the art without departing from the scope of the present invention.

## Claims

1. A method of capturing images for stereoscopic display comprising the steps of:
providing a support means (190);
rotatably mounting a first end of an offset mounting means (120) to the support means (190) such that the offset mounting means (120) extends radially from its axis of rotation toward a second end of the offset mounting means;
rotatably mounting an image capture means (110) to the second end of the offset mounting means (120);
rotating said offset mounting means (110) through a first series of positions in a constant direction;
capturing an image with said image capture means (110) at each of said series of positions such that said images cover a 360 degree field-of-view;
converting each of said captured images into a first digital data image for each of said series of first positions;
creating a first totally immersive representation from said first digital data images;
storing said first totally immersive representation in memory (294, 298);
rotating said image capture means (110) about its own mounting by 180 degrees so that said image capture means (110) is in a second position;
rotating said offset mounting means through a second series of positions in a constant direction;
capturing an image with said image capture means (110) at each of said series of positions such that said images cover a 360 degree field-of-view;
converting each of said captured images into a second digital data image for each of said series of second positions;
creating a second totally immersive representation from said second digital data images; and
storing said totally immersive representation in memory (294, 298).

2. The method of capturing immersive images for stereoscopic display according to claim 1 wherein said image capture means (110) comprises video or still image camera systems.

3. The method of capturing immersive images for stereoscopic display according to claim 2 wherein said video or still image camera systems comprise digital and film cameras (112).

4. The method of capturing immersive images for stereoscopic display according to claim 1 wherein said image capture means (110) comprises:
a camera (112); and
a fisheye or wide-angle lens (114) attached to said camera.

5. The method of capturing immersive images for stereoscopic display according to claim 1 wherein said creating a first totally immersive representation step further comprises the step of:
combining said first digital data images for each of said series of first positions into said first totally immersive representation, so that said first totally immersive representation is a seamless image.

6. The method of capturing immersive images for stereoscopic display according to claim 1 wherein said transforming a portion of said totally immersive representation step further comprises the step of:
transforming said portion based on user input.

7. The method of capturing immersive images for stereoscopic display according to claim 6 wherein said user input comprises:
pan, tilt, and zoom.

8. A method according to claim 1, wherein said images are spherical.

9. The method of any preceding claim which further comprises the step of transforming a portion of each of said two totally immersive representations with distortion and perspective correction; and displaying said portions of said two totally immersive representations independently to each eye of a user.

## Patentansprüche

1. Verfahren zur Erfassung von Bildern für eine stereoskopische Anzeige, mit den folgenden Schritten:
Bereitstellen einer Halterungseinrichtung (190);
drehbares Befestigen eines ersten Endes einer versetzten Befestigungseinrichtung (120) an der Halterungseinrichtung (190), derart, dass die versetzte Befestigungseinrichtung (120) sich in Radialrichtung von ihrer Drehachse aus in Richtung auf ein zweites Ende der versetzten Befestigungseinrichtung erstreckt;
drehbares Befestigen einer Bilderfassungseinrichtung (110) an dem zweiten Ende der versetzten Befestigungseinrichtung (120);
Drehen der versetzten Befestigungseinrichtung (110) über eine erste Serie von Positionen in einer konstanten Richtung;
Erfassen eines Bildes mit der Bilderfassungseinrichtung (110) an jeder der Serie von Positionen, derart, dass die Bilder ein Blickfeld von 360 Grad abdecken;
Umwandeln jedes der erfassten Bilder in ein erstes digitales Datenbild für jede der Serie von ersten Positionen;
Erzeugen einer ersten total-immersiven Darstellung aus den ersten digitalen Datenbildern;
Speichern der ersten total-immersiven Darstellung in einem Speicher (294, 298);
Drehen der Bilderfassungseinrichtung (110) um ihre eigene Befestigung um 180 Grad, sodass sich die Bilderfassungseinrichtung (110) in einer zweiten Position befindet;
Drehen der versetzten Befestigungseinrichtung über eine zweite Serie von Positionen in einer konstanten Richtung;
Erfassen eines Bildes mit der Bilderfassungseinrichtung (110) an jeder der Serie von Positionen derart, dass die Bilder ein Blickfeld von 360 Grad überdecken;
Umwandeln jeder der erfassten Bilder in ein zweites digitales Datenbild für jede der Serie von zweiten Positionen;
Erzeugen einer zweiten total-immersiven Darstellung aus den zweiten digitalen Datenbildern; und
Speichern der total-immersiven Darstellung in einem Speicher (294, 298).

2. Verfahren zur Erfassung von immersiven Bildern zur stereoskopischen Darstellung gemäß Anspruch 1, bei dem die Bilderfassungseinrichtung (110) Video-oder Standbild-Kamerasysteme umfasst.

3. Verfahren zur Erfassung von immersiven Bildern zur stereoskopischen Darstellung gemäß Anspruch 2, bei dem die Video- oder Standbild-Kamerasysteme digitale und Filmkameras (112) umfassen.

4. Verfahren zur Erfassung von immersiven Bildern zur stereoskopischen Darstellung gemäß Anspruch 1, bei dem die Bilderfassungseinrichtung (110) eine Kamera (112); und
eine an der Kamera angebrachte Fischaugen- oder Weitwinkel-Linse (114) umfasst.

5. Verfahren zur Erfassung von immersiven Bildern zur stereoskopischen Darstellung gemäß Anspruch 1, bei dem der Schritt der Erzeugung einer ersten total-immersiven Darstellung weiterhin den Schritt des:
Kombinierens der ersten digitalen Datenbilder für jede der Serie von ersten Positionen in die erste total-immersive Darstellung derart umfasst, dass die erste total-immersive Darstellung ein nahtloses Bild ist.

6. Verfahren zur Erfassung von immersiven Bildern zur stereoskopischen Darstellung gemäß Anspruch 1, bei dem der Schritt der Transformation eines Teils der total-immersiven Darstellung weiterhin den Schritt der:
Transformation des Teils auf der Grundlage einer Benutzer-Eingabe umfasst.

7. Verfahren zur Erfassung von immersiven Bildern zur stereoskopischen Darstellung gemäß Anspruch , bei der die Benutzer-Eingabe folgendes umfasst:
Schwenk, Neigung und Zoom.

8. Verfahren nach Anspruch 1, bei dem die Bilder sphärisch sind.

9. Verfahren nach einem der vorhergehenden Ansprüche, das weiterhin den Schritt der Transformation eines Teils jedes der zwei total-immersiven Darstellungen mit einer Verzerrungs- und Perspektiven-Korrektur und die unabhängige Darstellung der Teile der zwei total-immersiven Darstellungen an jedes Auge eines Benutzers umfasst.

## Revendications

1. Procédé de capture d'images en vue d'un affichage stéréoscopique comprenant les étapes consistant à :
prévoir un moyen de support (190) ;
monter de manière rotative une première extrémité d'un moyen de montage décalé (120) sur le moyen de support (190) de telle sorte que le moyen de montage décalé (120) s'étende radialement depuis son axe de rotation vers une deuxième extrémité du moyen de montage décalé ;
monter de manière rotative un moyen de capture d'images (110) sur la deuxième extrémité du moyen de montage décalé (120) ;
tourner ledit moyen de montage décalé (110) dans une première série de positions dans une direction constante ;
capturer une image avec ledit moyen de capture d'images (110) dans chacune de ladite série de positions de telle sorte que lesdites images couvrent un champ de vision à 360 degrés ;
convertir chacune desdites images capturées en une première image de données numérique pour chacune de ladite série de premières positions ;
créer une première représentation totalement immersive à partir desdites premières images de données numériques ;
stocker ladite première représentation totalement immersive dans une mémoire (294, 298) ;
tourner ledit moyen de capture d'images (110) autour de son propre support à 180 degrés de telle sorte que ledit moyen de capture d'images (110) soit dans une deuxième position ;
tourner ledit moyen de montage décalé dans une deuxième série de positions dans une direction constante ;
capturer une image avec ledit moyen de capture d'images (110) dans chacune de ladite série de positions de telle sorte que lesdites images couvrent un champ de vision à 360 degrés ;
convertir chacune desdites images capturées en une deuxième image de données numérique pour chacune de ladite série de deuxièmes positions;
créer une deuxième représentation totalement immersive à partir desdites deuxièmes images de données numériques ; et
stocker ladite représentation totalement immersive dans une mémoire (294, 298).

2. Procédé de capture d'images immersives en vue d'un affichage stéréoscopique selon la revendication 1, dans lequel ledit moyen de capture d'images (110) comprend des systèmes de caméras vidéo ou de photographie.

3. Procédé de capture d'images immersives en vue d'un affichage stéréoscopique selon la revendication 2, dans lequel lesdits systèmes de caméras vidéo ou de photographie comprennent des caméras numériques et à films (112).

4. Procédé de capture d'images immersives en vue d'un affichage stéréoscopique selon la revendication 1, dans lequel ledit moyen de capture d'images (110) comprend :
une caméra (112) ; et
un objectif à très grand angle ou à grand angle (114) relié à ladite caméra.

5. Procédé de capture d'images immersives en vue d'un affichage stéréoscopique selon la revendication 1, dans lequel ladite étape de création d'une première représentation totalement immersive comprend en outre l'étape consistant à :
combiner lesdites premières images de données numériques pour chacune de ladite série de premières positions en ladite première représentation totalement immersive, de telle sorte que ladite première représentation totalement immersive soit une image uniforme.

6. Procédé de capture d'images immersives en vue d'un affichage stéréoscopique selon la revendication 1, dans lequel ladite étape de transformation d'une partie de ladite représentation totalement immersive comprend en outre l'étape consistant à :
transformer ladite partie sur la base d'une entrée utilisateur.

7. Procédé de capture d'images immersives en vue d'un affichage stéréoscopique selon la revendication 6, dans lequel ladite entrée utilisateur comprend :
un panoramique, une inclinaison et un zoom.

8. Procédé selon la revendication 1, dans lequel lesdites images sont sphériques.

9. Procédé selon l'une quelconque des revendications précédentes comprenant en outre l'étape consistant à transformer une partie desdites deux représentations totalement immersives avec une distorsion et une correction de perspective ; et afficher lesdites parties desdites deux représentations totalement immersives de manière indépendante à chaque oeil d'un utilisateur.
